(19) Europäisches Patentamt
European Patent Office
Office européen des brevets

(11) **EP 2 863 167 B1**

(12) **EUROPÄISCHE PATENTSCHRIFT**

(45) Veröffentlichungstag und Bekanntmachung des Hinweises auf die Patenterteilung:
**11.12.2019  Patentblatt 2019/50**

(51) Int Cl.:
***G01B 11/25*** *(2006.01)*

(21) Anmeldenummer: **14003493.5**

(22) Anmeldetag: **10.10.2014**

(54) **Verfahren und Vorrichtung zur Messung der Ablenkung von Lichtstrahlen durch eine Objektstruktur oder ein Medium**

Method and device for measuring the deflection of light beams by an object structure or a medium

Procédé et dispositif de mesure de la déviation de rayons lumineux à travers la structure d'un objet ou d'un support

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2013  DE 102013017012**
**14.02.2014  DE 102014002084**

(43) Veröffentlichungstag der Anmeldung:
**22.04.2015  Patentblatt 2015/17**

(73) Patentinhaber: **Fraunhofer-Gesellschaft zur Förderung der angewandten Forschung e.V.**
**80686 München (DE)**

(72) Erfinder: **Tobisch, Alexander**
**D-91054 Erlangen (DE)**

(74) Vertreter: **Gagel, Roland**
**Patentanwalt Dr. Roland Gagel**
**Landsberger Strasse 480a**
**81241 München (DE)**

(56) Entgegenhaltungen:
**WO-A1-01/50760**

- **M.C. KNAUER ET AL.: "Deflektometrie macht der Interferometrie Konkurrenz", TECHNISCHES MESSEN, Bd. 76, Nr. 4, 2009, Seiten 175-181, XP002736601,**
- **S Peterhänsel ET AL: "Microdeflectometry for transparent objects", DGaO-Proceedings 2009, 1 June 2009 (2009-06-01), XP055534212, Retrieved from the Internet: URL:https://www.dgao-proceedings.de/download/110/110_p24.pdf [retrieved on 2018-12-13]**

**Beschreibung**

**Technisches Anwendungsgebiet**

Die vorliegende Erfindung betrifft ein Verfahren und eine Vorrichtung zur ortsaufgelösten Bestimmung der Ablenkung von Lichtstrahlen durch eine Objektstruktur oder ein Medium, bei dem ein Oberflächenbereich eines Objekts oder ein Bereich des Mediums mit wenigstens einem optischen Muster beleuchtet wird und an dem Oberflächenbereich reflektierte oder durch den Oberflächenbereich oder den Bereich des Mediums hindurchgetretene Beleuchtungsstrahlen mit einem ortsauflösenden optischen Detektor erfasst werden.

Ein technisches Anwendungsgebiet der Erfindung ist die Vermessung spiegelnder Oberflächen. Im Gegensatz zu rauen Oberflächen, die eine Struktur besitzen und Licht i.A. nach allen Richtungen reflektieren, besitzen spiegelnde Oberflächen keine sichtbare Struktur, sie sind unsichtbar. Sie reflektieren einen einfallenden Lichtstrahl nach dem Prinzip "Einfallswinkel gleich Ausfallswinkel". Ob eine Oberfläche spiegelnd oder rau ist, wird durch das Rayleigh-Kriterium definiert. Um die Form von spiegelnden Oberflächen zu erfassen, sind entsprechend besondere Verfahren erforderlich.

Der Hauptanwendungsbereich der vorgeschlagenen Vorrichtung und des vorgeschlagenen Verfahrens ist die Messung bzw. Bestimmung der Oberflächentopographie von Halbleiterscheiben (Wafern). Die normalerweise aus Silizium gefertigten Wafer bekommen durch eine Reihe von Schleif- und Polierprozessen eine spiegelnde Oberfläche und evtl. auch eine spiegelnde Rückseite. Für viele Halbleiterprozesse ist eine enorm gute Ebenheit der Halbleiterscheibe erforderlich. Durch die immer kleiner werdenden Strukturgrößen, steigen die Anforderungen an die Oberflächenqualität bis hin zur Nanotopographie. Entsprechend besteht ein Bedarf an Messgeräten zur Topographiemessung von Halbleiterscheiben. Ziel ist die Prozesskontrolle, Qualitätssicherung und die Charakterisierung von Prozessen.

Verglichen mit anderen Anwendungen, sind an die Vermessung von Halbleiterscheiben besondere Anforderungen gestellt. Wichtigster Punkt sind die äußerst flachen Topographien, die Halbleiterscheiben aufweisen. Um die Nanotopographie von Halbleiterscheiben messen zu können, ist eine enorme vertikale Auflösung bis in den unteren Nanometerbereich erforderlich, während eine, verglichen damit, grobe laterale Auflösung von ca. 100 $\mu$m ausreichend ist. Zudem sind große Messfelder nötig, die optimaler Weise die Größe der zu vermessenden Halbleiterscheibe aufweisen. Der derzeitige Standard-Durchmesser von Halbleiterscheiben liegt bei 300 mm.

Der Anwendungsbereich der vorgeschlagenen Vorrichtung und des vorgeschlagenen Verfahrens ist nicht auf die Vermessung von Halbleiterscheiben beschränkt, sondern liegt allgemein bei der Vermessung spiegelnder Oberflächen oder der Messung von zumindest teiltransparenten Medien in Transmission.

**Stand der Technik**

Zur Messung der Topographie von Halbleiterscheiben ist eine Reihe von Messverfahren bekannt und im Einsatz. Die Wichtigsten lassen sich grob in folgende Kategorien unterteilen: vollflächige optische Verfahren, scannende Verfahren und elektrische Sensoren.

In der Regel kommen für die Messung Interferometer zum Einsatz. Es wurden z.B. Fizeau-Interferometer mit einem Messfeld von 300 mm realisiert. Auf Grund des großen Messfeldes und den hohen Anforderungen bzgl. Genauigkeit und Stabilität handelt es sich um vergleichsweise aufwändige Verfahren. Außerdem werden Weißlichtinterferometer eingesetzt, die bisher jedoch nicht mit einem Messfeld in der Größe von 300 mm realisiert werden konnten. Es sind daher mehrere benachbarte Einzelmessungen erforderlich, um eine vollständige Vermessung einer Halbleiterscheibe zu erreichen (Stitching).

Neben den vollflächigen Verfahren, bei denen ein größerer Oberflächenbereich mit einer Einzelmessung vermessen wird, gibt es scannende Verfahren und Profilometer (z.B. scannende Deflektometrie, Laserprofilometer). Diese Verfahren tasten die Oberfläche der Halbleiterscheibe in einem vorgegebenen Raster ab, können die Oberfläche also nicht vollflächig auf einmal erfassen.

Neben optischen Verfahren werden auch elektrische Sensoren, insbesondere kapazitive oder induktive Abstandssensoren eingesetzt. Auch damit ist eine Erfassung der Form von Halbleiterscheiben möglich. Jedoch werden mit elektrischen Sensoren derzeit keine so hohen lateralen Auflösungen erzielt wie mit optischen Verfahren.

Neben den bekannten Verfahren zur Vermessung von Halbleiterscheiben sind auch neigungsmessende Verfahren und Verfahren bekannt, die im Allgemeinen die Ablenkung von Lichtstrahlen bei der Transmission durch ein transparentes Medium messen.

So wird bei der sogenannten Schlieren-Methode, die bis auf das 17. Jahrhundert zurückgeht, die Ablenkung von Lichtstrahlen bei der Transmission durch ein Medium gemessen. Die Ablenkung der Strahlen kommt durch optische Inhomogenitäten des Mediums zustande, z.B. eine Variation des Brechungsindex in Luft durch Temperaturschwankungen. Es wurden damit Strömungen, Temperaturverteilungen, Druckwellen usw. sichtbar gemacht. Bei der Schlieren-Methode wird das Medium von Lichtstrahlen durchleuchtet. Ablenkungen der Strahlen werden je nach Richtung der Ablenkung mehr oder weniger durch ein Knife-Edge, allgemein eine Schlieren-Blende geblockt. Die Ebene, in der die Schlieren-Blende angeordnet ist, wird entsprechend Schlieren-Cutoff -Ebene oder Schlierenebene genannt. Die interessierende Ebene des zu untersuchenden Mediums wird auf den Schirm durch eine Linse abgebildet. Je nachdem wie groß die Ablenkungen in jedem Punkt sind, desto heller oder dunkler ist dieser Messpunkt auf dem Schirm. Der Grad der Ablenkung ist also durch die Intensität kodiert. Das so entstandene Intensitätsbild heißt Schlieren-Bild. Statt Knife-Edges oder Lochblenden können auch Gitter oder linear variable Graufilter oder auch Farbfilter (vgl. Rainbow Schlieren oder Color Schlieren) vor der Lichtquelle und als Schlierenfilter verwendet werden.

Ein Verfahren, das zur Vermessung spiegelnder Oberflächen bekannt ist, ist die Deflektometrie. Bei der Deflektometrie wird eine diffus leuchtende Mattscheibe zur Beleuchtung einer Objektoberfläche eingesetzt. Eine Kamera beobachtet das Spiegelbild der Mattscheibe (= diffus abstrahlendes Licht), das an der zu untersuchenden spiegelnden Oberfläche reflektiert wurde. Vorzugsweise wird die Kamera dabei auf die spiegelnde Oberfläche fokussiert. Diese Ebene wird also scharf abgebildet, die Mattscheibe entsprechend unscharf. Durch Unebenheiten (Topographie) der zu untersuchenden Oberfläche erscheint das Spiegelbild des Mattscheiben-Musters verzerrt. Die Verwendung von Sinus-Intensitätsmustern und einem kombinierten Phasenschiebeverfahren, wie es aus der Interferometrie bekannt ist, ist vorteilhaft (Phasenmessende Deflektometrie). Es handelt sich bei der Deflektometrie um ein neigungsmessendes Verfahren. Je nach Neigung der Oberfläche an einem bestimmten Punkt sieht der Sichtstrahl, der von der Kamera kommt, eine andere Stelle auf der Mattscheibe, also z.B. einen anderen Intensitätswert. Die lokale Neigung ist also über die Intensität kodiert. Wird ein Phasenschiebeverfahren verwendet, ist nicht die Intensität der primäre Messwert, sondern die Phasenlage des Sinus auf der Mattscheibe. Die Neigungsmessung ist dabei nicht unbedingt eindeutig. Es sind entsprechend aufwändige Kalibrierungsschritte notwendig. Um eine Eindeutigkeit herzustellen werden z.B. auch zwei oder mehrere Kameras aus verschiedenen Blickrichtungen verwendet (Stereo-Deflektometrie). Die Deflektometrie wird heutzutage zur Neigungsmessung von spiegelnden Oberflächen verwendet, z.B. Spiegeln, Autokarosserien, polierten oder verchromten Werkstücken, Linsen, Brillengläsern.

Die Veröffentlichung von M.C. Knauer et al., "Deflektometrie macht der Interferometrie Konkurrenz", Technisches Messen 76 (2009) 4, S. 175 - 181 beschreibt sowohl die Technik der mikroskopischen Deflektometrie als auch die Technik der makroskopischen Deflektometrie. Diese Techniken sind auch in DE 10 2008 023 599 A1 beschrieben. Bei der makroskopischen Deflektometrie, die im Gegensatz zur mikroskopischen Deflektometrie zur Vermessung makroskopischer Oberflächenbereiche geeignet ist, wird ein Muster auf einem großen Schirm (Mattscheibe) erzeugt. Das von dieser diffus streuenden Mattscheibe ausgehende Licht wird dann nach Reflexion an der zu vermessenden Oberfläche von einer Kamera erfasst und ausgewertet.

## Beschreibung der Erfindung

Die Aufgabe der vorliegenden Erfindung besteht darin, ein Verfahren und eine Vorrichtung zur Messung bzw. Bestimmung der Ablenkung von Lichtstrahlen bei Reflexion an einer Objektstruktur oder bei Durchgang durch ein Objekt oder ein Medium anzugeben, die sich einfach und kostengünstig realisieren lassen und eine möglichst großflächige quantitative Bestimmung der Ablenkung ermöglichen. Die Aufgabe wird mit dem Verfahren und der Vorrichtung nach Anspruch 1 und 8 gelöst. Vorteilhafte Ausgestaltungen des Verfahrens und der Vorrichtung sind Gegenstand der abhängigen Patentansprüche oder lassen sich der nachfolgenden Beschreibung sowie den Ausführungsbeispielen und Zeichnungen entnehmen. Bei dem vorgeschlagenen Verfahren wird ein makroskopischer Oberflächenbereich eines zu vermessenden Objekts oder ein Bereich eines zu vermessenden Mediums mit wenigstens einem optischen Muster zeitgleich beleuchtet. Bei dem optischen Muster handelt es sich vorzugsweise um ein Intensitätsmuster, also eine Variation der Intensität über den Strahlquerschnitt des Beleuchtungsstrahlbündels. Je nach Anwendung kann es auch von Vorteil sein, Muster bestehend aus verschiedenen Wellenlängen zu verwenden. Das optische Muster wird bei dem Verfahren in eine Ebene scharf abgebildet, die in Beleuchtungsrichtung in einem Abstand vor oder hinter dem Oberflächenbereich oder dem Bereich des Mediums liegt. Bei dieser Ebene handelt es sich somit um die Bildebene der optischen Abbildung des Musters. An dem Oberflächenbereich reflektierte oder durch den Oberflächenbereich oder den Bereich des Mediums hindurchgetretene Beleuchtungsstrahlen werden mit einem ortsauflösenden optischen Detektor erfasst. Hierzu wird der Oberflächenbereich des Objekts oder ein anderer interessierender Bereich des Objekts oder der Bereich des Mediums mit einer optischen Anordnung auf den optischen Detektor abgebildet. Mit einem zwischen dem Objekt oder Medium und dem Detektor angeordneten optischen Element wird dabei die numerische Apertur der Abbildung auf den Detektor so eingestellt, dass sie kleiner oder gleich der numerischen Apertur der Beleuchtung ist, mit der der Oberflächenbereich des Objekts oder der Bereich des Mediums beleuchtet wird. Die numerische Apertur der Beleuchtung kann in einer Ausgestaltung des Verfahrens ebenfalls eingestellt werden, beispielsweise über eine optische Blende. Aus einer Veränderung des mit dem Detektor erfassten optischen Musters wird schließlich die Ablenkung der Beleuchtungsstrahlen ortsaufgelöst bestimmt.

Die vorgeschlagene Vorrichtung verfügt über einen optischen Mustergenerator, mit dem ein makroskopischer Oberflächenbereich eines Objekts oder ein Bereich des Mediums mit wenigstens einem optischen Muster vollflächig bzw. zeitgleich beleuchtbar ist, und einen ortsauflösenden optischen Detektor, mit dem an dem Oberflächenbereich des Objekts reflektierte oder durch den Oberflächenbereich oder den Bereich des Mediums hindurchgetretene Beleuchtungsstrahlen erfassbar sind. Die Vorrichtung weist weiterhin eine erste Abbildungsoptik auf, mit der das optische Muster des Mustergenerators in eine Ebene scharf abgebildet wird, die in Beleuchtungsrichtung in einem Abstand vor oder hinter dem Oberflächenbereich oder dem Bereich des Mediums liegt, und eine zweite Abbildungsoptik, mit der der Oberflächenbereich des Objekts oder ein anderer interessierender Bereich des Objekts oder der Bereich des Mediums auf den optischen Detektor abgebildet wird. Die zweite Abbildungsoptik beinhaltet zwischen dem Objekt oder Medium und dem Detektor ein optisches Element, durch das die numerische Apertur der Abbildung auf den optischen Detektor so einstellbar ist, dass sie kleiner oder gleich der numerischen Apertur der Beleuchtung ist, mit der der Oberflächenbereich des Objekts oder der Bereich des Mediums beleuchtet wird.

Mit dem Verfahren und der Vorrichtung kann in einfacher Weise eine vollflächige quantitative Messung der Ablenkung von Lichtstrahlen ortsaufgelöst durchgeführt werden, die z.B. bei Reflexion an einer spiegelnden Oberfläche auf Grund von Unebenheiten der Oberfläche (Topographie H(x,y)) oder bei Transmission durch ein Medium auf Grund von Inhomogenitäten des Mediums (z.B. Variation des Brechungsindex auf Grund von Temperaturschwankungen) entstehen. Grundlage ist ein Schlieren-optisches System, wobei zusätzlich eine strukturierte Beleuchtung (Muster), vorzugsweise erzeugt durch einen Mustergenerator, eingekoppelt und in eine Ebene in einem Abstand zur zu untersuchenden Ebene des Objekts oder Mediums projiziert wird. Die quantitative Neigungsmessung $\begin{pmatrix} \partial_x H(x,y) \\ \partial_y H(x,y) \end{pmatrix}$ wird dann durch deflektometrische Messung bzw. je nach Wahl der Größe von Beleuchtungs- und Abbildungsapertur durch eine Kombination aus deflektometrischem Prinzip und Schlieren-Methode ermöglicht.

Das Verfahren und die Vorrichtung sind dabei so ausgebildet, dass ein makroskopischer Bereich der Oberfläche oder des Mediums mit einer Einzelmessung erfasst werden kann, vorzugsweise ein Bereich von $\geq$ 1cm$^2$. Je kleiner die numerische Apertur der Abbildung ist, desto höher ist die erreichte Genauigkeit der Ablenkungsmessung. Um eine hohe Genauigkeit zu erreichen, wird die Beleuchtungsapertur also möglichst klein gewählt, vorzugsweise $\leq$ 0,03. Die numerische Apertur der Abbildung wiederum ist indirekt proportional zur erreichten lateralen Auflösung, die entsprechend eine untere Grenze für die Wahl der Apertur definiert. Bei derart kleinen numerischen Aperturen ist die Rayleighsche Schärfentiefe der Abbildung i.A. viel größer als die Schwankung der zu vermessenden Oberfläche.

Vorzugsweise werden bei der Messung Sinus-Intensitätsmuster zusammen mit einem Phasenschiebeverfahren verwendet, das aus der Interferometrie oder der phasenmessenden Deflektometrie bekannt ist. In einem sekundären Schritt kann die Topographie (Höhe, bei Untersuchung einer spiegelnden Oberfläche) bzw. der Brechungsindex (bei Messung eines Mediums in Transmission) H(x,y) durch bekannte Integrationsverfahren ermittelt werden. Selbstverständlich sind auch andere Arten von Mustern ohne Einsatz eines Phasenschiebeverfahrens möglich.

Des Weiteren ist es mit dem vorgestellten Aufbau möglich, das Laplacebild (2. räumliche Ableitung der Höhe bzw. Brechungsindex $\left(\partial_x^2 H(x,y) + \partial_y^2 H(x,y)\right)$, in Transmission bekannt als Shadowgramm, in Reflexion bekannt als Makyoh-Bild), sowie eine semi-quantitative Neigungskarte bzw. Ablenkungskarte ($|\partial_x H(x,y)| + |\partial_y H(x,y)|$), bekannt als Schlieren-Bild) zu erhalten. Diese Bilder eignen sich zur Echtzeit Analyse, da hierfür keine Bildrekonstruktion (Rechenarbeit) nötig ist. Da es sich um höhere Ableitungen der Höhe bzw. des Brechungsindex handelt, sind diese Bilder prädestiniert zur Defekterkennung. Sie können im Vorfeld der quantitativen Messprozedur des vorgeschlagenen Verfahrens verwendet werden.

## Kurze Beschreibung der Zeichnungen

Beispielhafte Ausgestaltungen der vorgeschlagenen Vorrichtung sowie des vorgeschlagenen Verfahrens werden im Folgenden anhand der Figuren 1 bis 5 näher erläutert. Hierbei zeigen:

Fig. 1    eine schematische Darstellung eines Aufbaus zur Messung eines Objekts in Transmission;

Fig. 2    ein Beispiel für Bildgebung und Signalentstehung:

a) Konfiguration, bei der die numerische Apertur der Beleuchtung größer ist als die numerische Apertur der Abbildung; eine Ablenkung eines Lichtstrahls um den Winkel $\alpha$ kann durch eine Phasenverschiebung detektiert werden;
b) Konfiguration mit numerischer Beleuchtungsapertur = numerischer Abbildungsapertur; bei einer Ablenkung eines Lichtstrahls um den Winkel $\alpha$ ergibt sich zusätzlich zur Phasenverschiebung eine Intensitätsänderung; die Phasenverschiebung ist geringer als in a) (geringere Sensitivität);

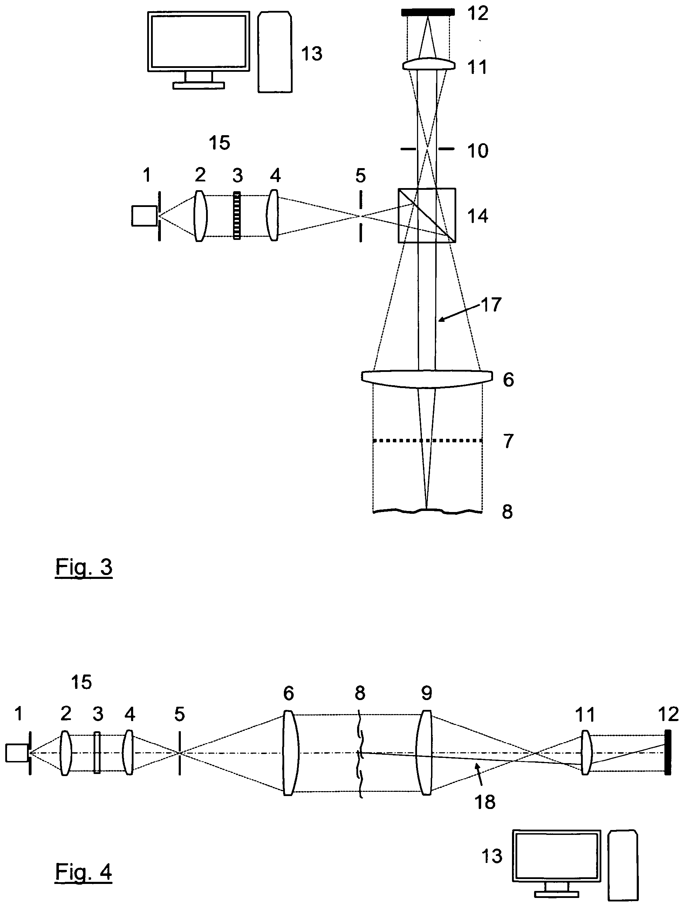

Fig. 3    eine schematische Darstellung eines Aufbaus zur Messung eines Objekts in Reflexion;

Fig. 4   eine schematische Darstellung einer Konfiguration zur Aufnahme eines Shadowgrams (beim Verfahren in Reflexion bekannt als "Makoyh"-Bild); und

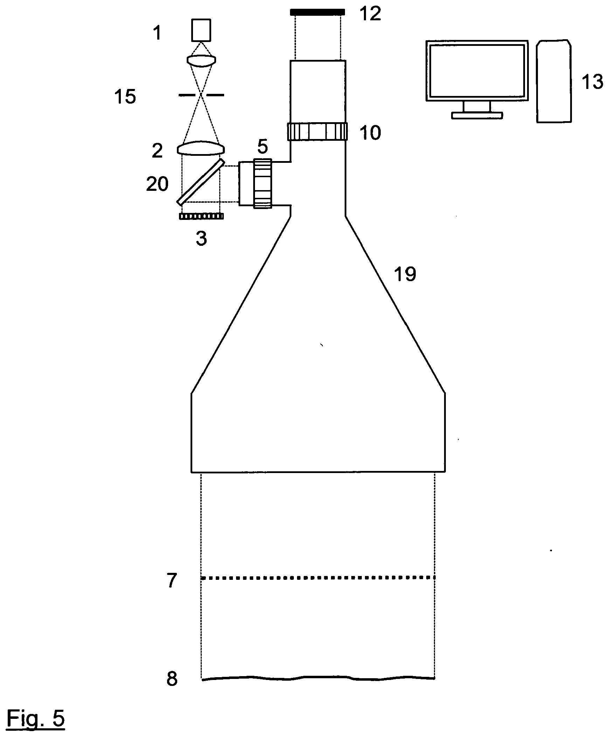

Fig. 5   eine schematische Darstellung einer Ausgestaltung zur Messung eines Objekts in Reflexion unter Verwendung eines telezentrischen Objektivs und eines Mustergenerators, der in Reflexion betrieben wird.

**Wege zur Ausführung der Erfindung**

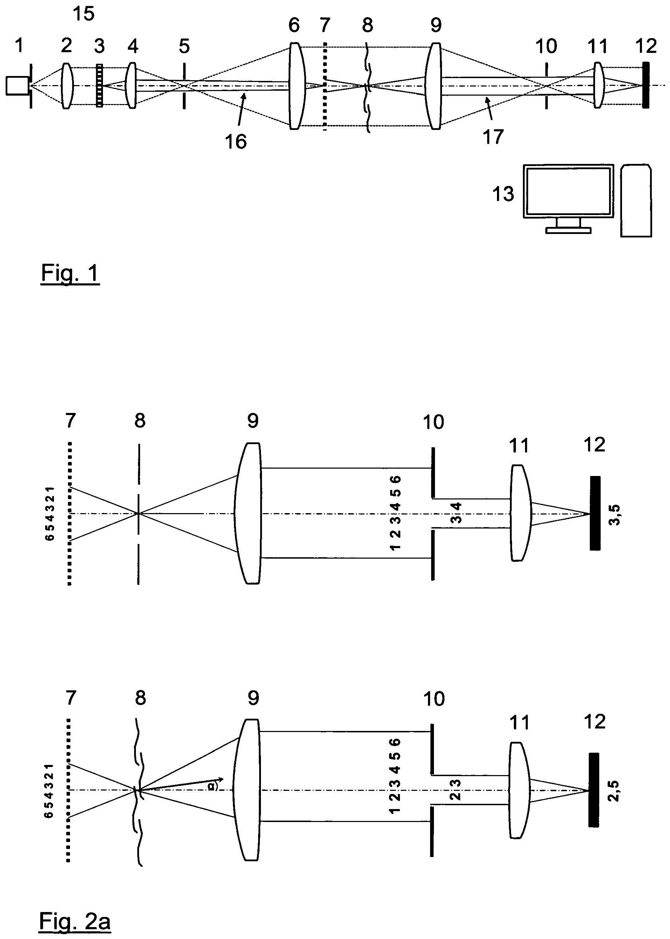

Fig. 3 zeigt einen beispielhaften schematischen Aufbau der vorgeschlagenen Vorrichtung zur Messung in Reflexion, also einer spiegelnden Oberfläche. Das Verfahrensprinzip für diese Messung wird im Folgenden anhand der Fig. 1 näher erläutert, die dasselbe Verfahren in einer Ausgestaltung zur Messung eines Mediums in Transmission zeigt und sich aus Gründen der Übersichtlichkeit besser zur Veranschaulichung der Strahlengänge eignet. Mit gleichen Bezugszeichen sind dabei, wie auch in den anderen Figuren, die gleichen Elemente der Vorrichtung und des Verfahrens bezeichnet. Die Beleuchtungseinheit 15 der Vorrichtung weist einen Mustergenerator 3 auf, der ein beliebiges optisches Muster erzeugen kann. Es kann sich dabei um einen Filter, ein Gitter oder einen elektronisch ansteuerbaren Lichtmodulator handeln. Dieser kann selbstleuchtend sein, wie z.B. ein OLED Display, oder das Licht in Transmission modulieren, wie z.B. ein LCD, oder das Licht in Reflexion modulieren, wie z.B. ein LCOS oder DMD. Wenn der Mustergenerator nicht selbstleuchtend ist, wird eine Beleuchtungsoptik benötigt, beispielsweise in Form einer Lichtquelle 1 und einer Kondensorlinse 2. Das mit dem Mustergenerator erzeugte Muster wird mit einer Projektionsoptik abgebildet. Im Beispiel der Figuren 1, 3 und 4 weist die Projektionsoptik zwei Linsen 4, 6 auf. Die Linse 4 erzeugt außerdem eine Abbildung der Lichtquelle 1 an einer Stelle zwischen den beiden Linsen 4, 6. An dieser Stelle kann eine Blende (Beleuchtungsapertur 5) angeordnet werden, die die Möglichkeit bringt, die Apertur der Beleuchtung zu variieren (z.B. Erzeugung einer kleinen Apertur durch Wahl einer kleineren Lochblende (Pinhole)). Vorzugsweise ist die Blende als variable (verstellbare) Irisblende ausgestaltet. Die Linse 6 ist Teil der Projektionsoptik, die die Ebene des Mustergenerators in eine Ebene 7 in einem Abstand vor oder hinter dem zu untersuchenden Medium 8 projiziert. Das Muster ist also in der Ebene 7 scharf. Der Beleuchtungsstrahlengang 16 und der Abbildungsstrahlengang 17 sind in der Figur ebenfalls angedeutet. Dargestellt ist hierbei ein Beleuchtungsstrahl (Strahlenbündel), der die Abbildung des zentralen Punktes des Mustergenerators 3 zeigt.

Der Rest der dargestellten Optik ist Teil des Abbildungssystems. Bei der Ausgestaltung in Reflexion (Fig. 3) ist die Linse 6 gleichzeitig Teil des Beleuchtungs- und Abbildungssystems, so dass in diesem Fall keine zweite Linse 9 wie bei Messung in Transmission erforderlich ist. Es ist außerdem vorteilhaft, den Aufbau in Reflexion so zu wählen, dass die Beleuchtung seitlich mit Hilfe eines Strahlteilers 14 eingekoppelt wird. Das Abbildungssystem, bestehend aus den Linsen 9 bzw. 6 und 11 und der Abbildungsapertur 10, bildet die zu untersuchende Ebene des Mediums bzw. der Oberfläche 8 auf die optische Detektoreinheit 12, z.B. ein CCD oder CMOS Sensor, ab. Die durch die Detektoreinheit 12 und die Linsen des Abbildungssystems gebildete Kamera ist also auf zu untersuchende Ebene fokussiert, beispielsweise die Oberfläche 8 des Objekts. Das projizierte Muster erscheint daher im Allgemeinen unscharf auf der Detektoreinheit 12. Bei der Wahl kleiner numerischer Aperturen der Abbildung auf die Detektoreinheit 12 und nicht allzu großem Abstand der Ebene 7 von der zu untersuchenden Ebene (bspw. kleiner 30 cm), ist es jedoch möglich, dass das in die Ebene 7 projizierte Muster innerhalb der Schärfentiefe der Abbildung liegt. Dadurch wird also sowohl die zu untersuchenden Ebene, als auch das Muster scharf abgebildet. Eine derartige Konfiguration ist vorteilhaft, da durch die scharfe Abbildung des Musters ein höherer Kontrast und damit verbunden eine höhere Messgenauigkeit erzielt werden, als wenn das Muster unscharf abgebildet wird. Der Abbildungsstrahlengang 17 ist durch einen Lichtstrahl (Strahlenbündel) dargestellt, der die Abbildung des zentralen Punktes der zu untersuchenden Ebene auf den Detektor 12 zeigt. In der Ebene der Abbildungsapertur 10 ergibt sich wie in der Ebene der Beleuchtungsapertur 5 eine Abbildung der Lichtquelle 1. In dieser Ebene (Schlieren-Cutoff Ebene) kann eine Blende (Schlierenblende) oder allgemein ein Filter angebracht sein, womit die Größe der Abbildungsapertur bestimmt wird und verändert werden kann. Vorzugsweise ist die Blende als variable (verstellbare) Irisblende ausgestaltet. Falls der Mustergenerator 3 selbstleuchtend ist und deswegen keine Lichtquelle 1 vorhanden ist, können die Ebenen der Beleuchtungsapertur 5 und der Abbildungsapertur 10 als Abbild einer virtuellen Lichtquelle angesehen werden.

Mit dem vorgestellten Aufbau kann auch ein klassisches Schlieren-Bild aufgenommen werden. Dazu wird der Mustergenerator 3 entfernt oder so geschalten, dass er keine Beleuchtungsstrukturierung aufweist. Es ergibt sich dann im Wesentlichen ein Aufbau nach der Toepler Schlieren-Methode, wobei die Ebene der Beleuchtungsapertur 5 die Ausdehnung der Beleuchtung definiert und die Ebene der Abbildungsapertur 10 die Schlieren-Cutoff Ebene ist. Entsprechend können in diesen Ebenen, je nach Ausgestaltungen der verschiedenen Schlieren-Methoden, diverse Filter, Gitter oder auch elektronisch ansteuerbare Lichtmodulatoren eingesetzt werden.

Mit dem vorgestellten Aufbau kann außerdem auch ein Makyoh-Bild aufgenommen werden. Makyoh ist nur im Zusammenhang mit spiegelnden Oberflächen bekannt. In Transmission ist dieses Bild als Shadowgramm bekannt. In Fig. 4 ist eine entsprechende Ausgestaltung (in Transmission) beispielhaft dargestellt. Es sind folgende Unterschiede zum Aufbau in Fig. 1 vorhanden. Für die ursprüngliche Makyoh Methode und auch für die Shadowgraphie wird keine Beleuchtungsstrukturierung benötigt, sodass der Mustergenerator 3 entweder entfernt wird oder keine Lichtmodulation generiert. Wichtigster Unterschied ist die fehlende Blende (Abbildungsapertur 10). Sie kann wahlweise auch hinreichend groß gewählt sein. Ebenfalls wichtig ist, dass die Detektoreinheit 12 bei diesen Methoden nicht auf die zu untersuchende Ebene fokussiert (also scharf gestellt) wird, sondern in einen Abstand von der zu untersuchenden Ebene. Vorzugsweise ist die Detektoreinheit 12 deshalb in Richtung der optischen Achse verschiebbar angeordnet. Man kann auch an der Stelle der Linse 11 ein Kameraobjektiv verwenden, das eine Fokusverstellung ermöglicht. Zudem wird in den ursprünglichen Ausgestaltungen der beiden Methoden eine Punktlichtquelle und entsprechend eine kollimierte Beleuchtung der zu untersuchenden Probe verwendet. Deswegen ist es vorteilhaft, die als Beleuchtungsapertur 5 eingesetzte Blende hinreichend klein zu wählen. Es gibt außerdem Ausgestaltungen sowohl der Shadowgraphie als auch der Makyoh Methode, bei denen strukturierte Beleuchtung verwendet wird. Auch diese Methoden sind mit dem vorgeschlagenen Aufbau ohne aufwändige Anpassungen realisierbar, da der Mustergenerator 3 beliebige Muster generieren kann.

Die Aufnahme eines Schlieren- und Makyoh-Bildes bzw. Shadowgrams, wie oben beschrieben, ist im Wesentlichen Stand der Technik. Neu ist, dass mit dem vorgestellten Aufbau beide Verfahren genutzt werden können, ohne dabei große Umbauten am Aufbau vornehmen zu müssen. Letztendlich müssen nur Blendengrößen verändert werden, Fokusebenen verstellt werden, z.B. durch Drehen an einem Kameraobjektiv, und evtl. ein anderes Muster auf dem Mustergenerator generiert werden. Die Schlieren-, Makoyh- und Shadowgram-Aufnahmen in der oben genannten Ausgestaltung sind nur qualitativ oder semiquantitativ.

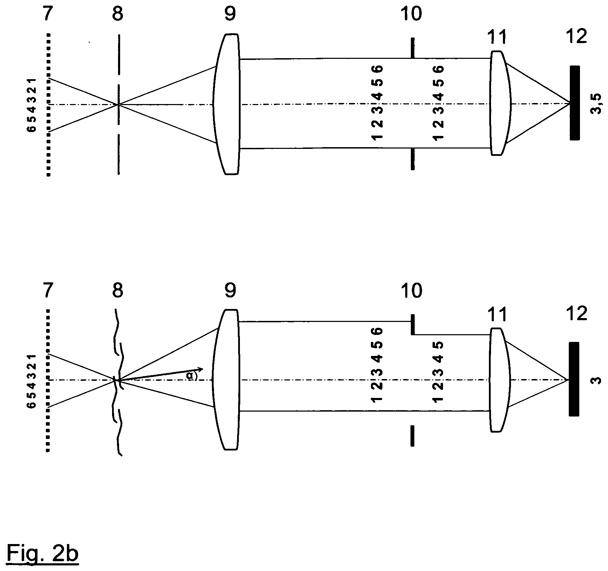

Das Wesentliche und Neue der vorliegenden Erfindung ist die Möglichkeit der quantitativen Ablenkungs- bzw. Neigungsmessung. Das Prinzip ist in Fig. 2 veranschaulicht. Es wird von einem Aufbau in Transmission (wie in Fig. 1) ausgegangen. Alle Überlegungen sind ohne weiteres auf einen Aufbau in Reflexion (wie z.B. in Fig. 3) analog übertragbar. Es geht um die Messung der Ablenkung von Lichtstrahlen, die bei einem Medium, das von Licht durchleuchtet wird, durch eine Variation des Brechungsindex des Mediums zustande kommen. Das kann z.B. durch eine Variation der Temperatur bedingt sein, die man messen will. In Reflexion bei der Messung einer spiegelnden Oberfläche kommen Ablenkungen der Lichtstrahlen durch eine Neigung der Oberfläche, also letztendlich durch die Topographie, zustande. Diese will man messen. Die Ablenkung bzw. Neigung ist ein Vektor mit einer Komponente in x- und y-Richtung. Die Ablenkung bei Transmission ist der Gradient des Brechungsindex. In Reflexion ist die gemessene Neigung der Oberfläche der Gradient der Höhe, also der Topographie. Aus dem ermittelten Gradienten kann mittels bekannter Integrationsalgorithmen dann in einem sekundären Schritt der Brechungsindex bzw. die Höhe ermittelt werden.

In Fig. 2 a) ist eine Konfiguration gezeigt, bei der die numerische Apertur der Abbildung - bestimmt durch die als Abbildungsapertur 10 eingesetzte Blende - kleiner ist als die numerische Apertur der Beleuchtung. Es hat sich als vorteilhaft erwiesen, Phasenschiebeverfahren einzusetzen, wie sie z.B. in der Interferometrie oder der phasenmessenden Deflektometrie verwendet werden. Es wird also vorzugsweise ein Sinus-Intensitätsmuster in die Ebene 7 projiziert. Statt die Intensität des Musters als primäre Messgröße heranzuziehen, wird eine Reihe von Sinus-Mustern nacheinander projiziert, wobei der Sinus jeweils um einen definierten Bruchteil seiner Periode verschoben ist. Schließlich wird die Phasenlage jedes Punktes des Musters eindeutig bestimmt. Es sind mindestens drei Aufnahmen mit phasenverschobenem Sinus erforderlich, um eine eindeutige Phasenbestimmung machen zu können. Da das Sinusmuster periodisch ist, ist die Eindeutigkeit der Phase nur innerhalb der Periode gegeben. Es werden bekannte Phasen-Unwrapping Algorithmen oder andere Methoden (z.B. mehrere Sinusmuster in unterschiedlichen räumlichen Frequenzen) verwendet, um jedem Punkt des Musters eine eindeutige Phase zuzuweisen und somit eine eindeutige Identifizierung zu ermöglichen. Das ist in Fig. 2 durch die Nummerierung (1 - 6) des Musters in Ebene 7 angezeigt. Es handelt sich um Phasenwerte, die voneinander unterschieden werden können.

In Fig. 2a) oben ist der Abbildungsstrahlengang für einen Messpunkt auf der Ebene des zu untersuchenden Mediums 8 in einem Fall gezeigt, in dem in diesem Punkt keine Ablenkung des Lichtstrahls (bzw. Strahlenbündels) induziert wird, wie z.B. im Fall eines homogenen Mediums. Auf Grund der kleineren numerischen Apertur der Abbildung wird ein Teil des Lichtstrahls durch die als Abbildungsapertur 10 eingesetzte Blende geblockt. Es kommen nur die Strahlen mit den Phasenwerten 3 und 4 hindurch, sodass auf der Detektoreinheit 12 ein Phasenwert von 3,5 an dieser Position gemessen wird. Es kann mathematisch gezeigt werden, dass sich bei einer Superposition von mehreren Sinuswellen mit gleicher Amplitude aber unterschiedlicher Phase, eine Sinuswelle ergibt, deren Phase der Mittelwert aus den einzelnen Phasen ist.

In Fig. 2a) unten ist der Strahlengang für den Fall gezeigt, dass das Medium eine Ablenkung des Lichtstrahls um den Winkel $\alpha$ induziert. Durch die Ablenkung des Strahlenbündels wird an der als Abbildungsapertur 10 eingesetzten Blende ein anderer Teil des Strahlenbündels geblockt, sodass in diesem Fall nur die Strahlen mit den Phasenwerten 2 und 3 passieren können. Entsprechend wird auf dem Detektor 12 ein Phasenwert von 2,5 gemessen. Die Ablenkung um einen Winkel $\alpha$ hat also eine messbare Phasendifferenz von 1 ergeben. Kennt man durch Kalibrierung die Parameter des Aufbaus, insbesondere die Mustergeometrie und den Abstand der Muster von der zu untersuchenden Ebene, kann der Winkel $\alpha$ direkt aus der gemessenen Phase trigonometrisch berechnet werden. Man hat entsprechend die Ablenkungen der Lichtstrahlen an jedem Punkt in der Richtung, in der das Sinusmuster verläuft, gemessen. Die zweite Komponente des Gradienten erhält man durch Wiederholung der Prozedur, wobei das Sinusmuster um 90° gedreht wird. Eine Intensitätsänderung ergibt sich in diesem Fall nicht, da sowohl mit als auch ohne Ablenkung die gleiche Lichtmenge auf den Detektor fällt. Der Signalgebung liegt in dieser Konfiguration im Prinzip ein deflektometrisches Messprinzip zu Grunde.

In Fig. 2b) ist eine Konfiguration gezeigt, bei der die numerische Apertur der Beleuchtung und die der Abbildung gleich groß gewählt wurden. Eine Strahlablenkung um einen Winkel α (unten) ergibt in diesem Fall eine Phasendifferenz von 0,5 zum nicht-abgelenkten Fall (oben). Die Phasenänderung ist also nur halb so groß wie in der vorherigen Konfiguration der Fig. 2a), sodass man mit einer geringeren Sensitivität der Ablenkungsmessung rechnen muss. Ein weiterer interessanter Aspekt in dieser Konfiguration ist die Tatsache, dass sich eine Intensitätsänderung in Abhängigkeit des Winkels α ergibt. Je größer a, desto weniger Licht fällt auf den Detektor, da mehr von der als Abbildungsapertur 10 eingesetzten Blende geblockt wird. Die Neigung ist also zusätzlich über die Intensität kodiert. Projiziert man ein homogenes Muster in die Ebene 7, erhält man mit dieser Konfiguration das semi-quantitative Schlierenbild. Der Signalgebung liegt in dieser Konfiguration also eine Kombination aus deflektometrischem Messprinzip und Schlieren Methode zu Grunde.

Würde man die numerische Apertur der Abbildung größer wählen als die der Beleuchtung, würde man für kleine Strahlablenkungen keine Phasen- oder Intensitätsänderung detektieren. Strahlablenkungen wären dann erst ab einem bestimmten Winkel messbar.

Fig. 2 a) und b) veranschaulichen außerdem, dass die größte noch messbare Strahlablenkung und damit der dynamische Messbereich von der Größe der Beleuchtungsapertur abhängen. Wird bei einer Strahlablenkung, die noch messbar sein soll, bereits der gesamte Lichtstrahl an der als Abbildungsapertur 10 eingesetzten Blende geblockt, ist die Beleuchtungsapertur zu klein gewählt.

Zur Bildverarbeitung und Auswertung der Rohmessdaten (Phasenberechnung, Neigungsberechnung, Topographierekonstruktion) wird eine Auswerteeinheit, z.B. ein PC, verwendet. Zur Realisierung eines Phasenschiebeverfahrens haben sich elektronisch ansteuerbare Lichtmodulatoren wie z.B. LCD, LCoS oder DMD als vorteilhaft erwiesen, da eine Änderung des Musters einfach, schnell und ohne mechanische Bewegung möglich ist. Zur Ansteuerung der Displays wird eine Steuereinheit benötigt. Als Steuer- und Auswerteeinheit 13 kann also z.B. ein PC verwendet werden, mit dem Lichtquelle, Mustergenerator und Kamera bzw. Detektoreinheit gesteuert und ausgewertet werden können.

In Fig. 5 ist eine weitere Ausgestaltung zur Messung eines Objekts in Reflexion gezeigt. Es wird ein telezentrisches Objektiv 19 als Optik für die Beleuchtung und gleichzeitig zur Abbildung auf den Detektor verwendet. Insbesondere bei großen Messfeldern ist es vorteilhaft, eine geeignete Konfiguration mehrerer Linsen zu verwenden, um einerseits Abbildungsfehler bestmöglich zu korrigieren und andererseits, um einen kürzeren Strahlengang und damit kompakteren Aufbau zu ermöglichen. Da ein objekt- und bildseitig telezentrischer Strahlengang bei dem vorgeschlagenen Verfahren vorteilhaft sind, eignen sich entsprechend telezentrische Objektive. Es ist ein Objektiv mit der Möglichkeit zur Lichteinkopplung erforderlich, was meist durch einen innenliegenden Strahlteiler realisiert ist. Telezentrische Objektive mit großen Sichtfeldern von z.B. 300 mm Durchmesser sind auf dem Markt erhältlich. Die Beleuchtungs- und Abbildungsaperturen 5 und 10 sind entsprechend über die Telezentrieblenden des Objektivs einstellbar. Auch bei einer Ausgestaltung zur Messung eines Objekts in Transmission können telezentrische Objektive verwendet werden. Es sind dann zwei Objektive erforderlich, eins zur Abbildung der Beleuchtung bzw. des Musters und das zweite zur Abbildung auf den Detektor. Der Aufbau in Fig. 5 zeigt außerdem beispielhaft die Verwendung eines Mustergenerators 3, der in Reflexion betrieben wird, z.B. ein LCoS Display. Es wird dabei ein Strahlteiler 20 verwendet, um das vom Mustergenerator reflektierte Licht in das Objektiv einzukoppeln. Wird ein LCoS Display als Mustergenerator verwendet, ist es vorteilhaft, einen polarisierenden Strahlteiler (PBS) zu verwenden, da polarisiertes Licht erforderlich ist.

Bei der vorgeschlagenen Vorrichtung handelt es sich somit um ein schlieren-optisches System in Transmission oder Reflexion, bestehend aus einer Beleuchtungseinheit mit einstellbarer Apertur, einer (Schlieren-) Linse- oder Linsenanordnung, einer Schlierenblende oder eines Schlierenfilters, in dessen Ebene die Lichtquelle abgebildet wird, und einer optischen Detektoreinheit, auf die die zu untersuchende Objektebene oder Ebene des Mediums abgebildet wird. Durch einen Mustergenerator kann ein Muster erzeugt werden, das durch die (Schlieren-) Linse oder Linsenanordnung in eine Ebene in einem Abstand zur zu untersuchenden Objektebene oder Ebene des Mediums projiziert wird, wodurch eine quantitative Bestimmung der Oberflächenneigung (Gradient der Oberfläche) bzw. der Ablenkung der Lichtstrahlen (Gradient des Brechungsindex) durch deflektometrische Messung möglich ist.

Mit dem vorgeschlagenen Verfahren und der vorgeschlagenen Vorrichtung lassen sich Halbleiterscheiben, z.B. geschliffene oder polierte Wafer, CMP-Wafer, evtl. prozessierte Wafer, vermessen. Einsatzbereich ist hierbei insbesondere die Nanotopographiemessung. Generell ist das Verfahren zur Vermessung von spiegelnden Oberflächen im Allgemeinen geeignet z.B. Spiegel, Linsen, Planoptiken oder polierte Metalloberflächen. Statt der Messung einer Oberfläche in Reflexion, kann ebenso ein Medium in Transmission gemessen werden z.B. zur Bestimmung von Inhomogenitäten in einem transparenten Medium oder Temperaturverteilungen in Luft.

Das vorgeschlagene Verfahren sowie die zugehörige Vorrichtung weisen die folgenden Vorteile auf. Durch die Beleuchtungsoptik ist die Möglichkeit vorhanden, die numerische Apertur der Beleuchtung zu variieren, bis hin zu einer näherungsweise kollimierten Beleuchtung, die die Aufnahme eines Shadowgramms bzw. Makyoh Bildes ermöglicht. Durch die Kontrolle der Beleuchtungsapertur kann ein optischer Tiefpassfilter erzeugt werden, der z.B. Aberrationen der Beleuchtung beseitigt oder Quantisierungseffekte des Mustergenerators (durch eine endliche räumliche Auflösung eines Mikrodisplays) verringert. Ein digitales Muster kann also z.B. näherungsweise analog gemacht werden bzw. geglättet werden. Dadurch ergibt sich eine höhere Genauigkeit der Neigungsmessung. Durch die gerichtete Musterprojektion erhält man eine Eindeutigkeit (Lösung des Mehrdeutigkeitsproblems von Höhe und Neigung der Deflektometrie), so dass im Allgemeinen ein geringerer Kalibrieraufwand nötig ist. Durch die große Zahl an Parametern, die man variieren kann (Beleuchtungsapertur, Abbildungsapertur, Muster, Abstand Muster zu Objekt bzw. Medium) steht generell ein großes Spektrum zur Festlegung der Messperformance (Größe des dynamischen Messbereichs, laterale Auflösung, Winkelauflösung, Speckleunterdrückung) zur Verfügung. Je nachdem, was für die jeweilige Anwendung Priorität hat, kann die Performance optimal gewählt werden. Insbesondere zur Messung von Halbleiterscheiben bestehen sehr spezielle Anforderungen verglichen mit anderen Anwendungen. So sind ein großes Sichtfeld nötig und eine höchstmögliche vertikale Auflösung (unterer Nanometerbereich), dafür ist aber eine grobe laterale Auflösung ($\sim 100 \, \mu$m) ausreichend. Weiterhin ist ein geringer dynamischer Messbereich erforderlich, da es sich um eine "ebene" Probe handelt. Das vorgeschlagene Verfahren ist ideal geeignet, um für die Messung von Halbleiterscheiben optimiert zu werden. Die grobe Anforderung hinsichtlich lateraler Auflösung ermöglicht bspw. die Wahl kleiner numerischer Abbildungsaperturen. Daraus ergibt sich eine hohe Genauigkeit der Neigungsmessung. Außerdem hat eine kleine numerische Apertur eine große Schärfentiefe zur Folge, sodass, bei nicht allzu großer Wahl des Abstandes zwischen der Ebene, in der das Muster projiziert wird, und der zu untersuchenden Ebene, eine scharfe Abbildung sowohl des Musters als auch der zu untersuchenden Ebene erreichen werden kann. Bei der herkömmlichen Deflektometrie erreicht man eine derartige Konfiguration in der Regel nicht, da die Mattscheibe (z.B. ein Bildschirm), auf der das Muster erzeugt wird, nicht beliebig nahe an die zu untersuchende Oberfläche herangebracht werden kann.

Mit geringen Veränderungen besteht bei dem vorgeschlagenen Verfahren zusätzlich die Möglichkeit, zwei qualitative bzw. semi-quantitative Bilder zu erzeugen, von denen das eine (Schlierenbild) sensitiv auf die Neigung der Oberfläche bzw. Änderung des Brechungsindex bei Transmission ist und das andere (Shadowgramm bzw. Makyoh-Bild) sensitiv auf die Krümmung bzw. 2. räumliche Ableitung (Laplacebild) ist. Diese Bilder stehen in Echtzeit ohne Rekonstruktion oder Berechnung zur Verfügung und eignen sich optimal für eine Defekterkennung und im Vorfeld der quantitativen Prozedur. Bei Verfahren wie der Deflektometrie oder der Interferometrie oder scannenden Verfahren hat man keine Möglichkeit, vor der Messung auf einfache Weise derartige Informationen zu bekommen.

Gegenüber bekannten Verfahren für die hochgenaue Topographiemessung von Halbleiterscheiben, insbesondere Interferometern, weist die vorgeschlagene Vorrichtung einen einfacheren Aufbau auf und lässt sich kostengünstiger realisieren. Weiterhin besteht die Möglichkeit zur Realisierung eines großen Messfeldes, das z.B. ausreichend ist, um 300 mm Halbleiterscheiben mit nur einer Aufnahme zu vermessen. Das Verfahren und die Vorrichtung ermöglichen u.a. die Nanotopographiemessung von Wafern (Topographie im lateralen Bereich zwischen 0,2 bis 20 mm) sowie die Messung der Welligkeit von Oberflächen. Der Aufbau ist flexibel, sodass er als integrierte Messtechnik genutzt werden kann. Die Vorrichtung ist robust gegenüber externen Schwingungen. Dies ist einer der größten Vorteile von neigungsmessenden Verfahren gegenüber Verfahren, die direkt die Höhe bzw. Abstand messen, wie z.B. Interferometer oder elektrische Sensoren. Da bei neigungsmessenden Verfahren die Höhe erst in einem zweiten Schritt (Integration) berechnet wird, ist man unabhängig von konstanten, zeitlichen Höhenänderungen (z.B. Vibrationen oder Erschütterungen).

## Bezugszeichenliste

| | |
|---|---|
| 1: Lichtquelle | 11: Linse |
| 2: Kondensor | 12: Detektoreinheit |
| 3: Mustergenerator | 13: Steuer- und Auswerteeinheit |
| 4: Linse | 14: Strahlteiler |
| 5: Beleuchtungsapertur | 15: Beleuchtungseinheit |
| 6: Projektionslinse | 16: Beleuchtungsstrahlengang |
| 7: Ebene, in der das Muster abgebildet wird | 17: Abbildungsstrahlengang |
| 8: zu untersuchendes Medium / Oberfläche | 18: abgelenkter Strahl |
| 9: Linse | 19: Telezentrisches Objektiv |
| 10: Abbildungsapertur | 20: Strahlteiler |

## Patentansprüche

1. Verfahren zur ortsaufgelösten Bestimmung der Ablenkung von Lichtstrahlen durch eine Objektstruktur oder ein Medium,
bei dem ein makroskopischer, spiegelnder Oberflächenbereich eines Objekts (8) oder ein makroskopischer Bereich des Mediums (8) von $\geq 1\text{cm}^2$ in einer Einzelmessung erfasst wird,
bei dem der makroskopische, spiegelnde Oberflächenbereich des Objekts (8) oder der makroskopische Bereich des Mediums (8) mit wenigstens einem optischen Muster beleuchtet wird und an dem spiegelnden Oberflächenbereich reflektierte oder durch den Bereich des Mediums (8) hindurchgetretene Beleuchtungsstrahlen mit einem ortsauflösenden optischen Detektor (12) erfasst werden, wobei

- bei der Beleuchtung des spiegelnden Oberflächenbereichs oder des Bereichs des Mediums (8) das für die Beleuchtung eingesetzte optische Muster mit einer ersten Abbildungsoptik (4, 6, 14) in eine Ebene (7) scharf abgebildet wird, die in Beleuchtungsrichtung in einem Abstand vor oder hinter dem spiegelnden Oberflächenbereich oder dem Bereich des Mediums (8) liegt,
- bei der Erfassung der Beleuchtungsstrahlen mit dem optischen Detektor (12) der spiegelnde Oberflächenbereich des Objekts (8) oder ein anderer interessierender Bereich des Objekts (8) oder der Bereich des Mediums (8) mit einer zweiten Abbildungsoptik (9, 11, 14) auf den optischen Detektor (12) abgebildet wird,
- mit einem zwischen dem Objekt (8) oder Medium (8) und dem Detektor (12) angeordneten optischen Element (10) die numerische Apertur der Abbildung so eingestellt wird, dass sie kleiner oder gleich der numerischen Apertur der Beleuchtung ist, mit der der spiegelnde Oberflächenbereich des Objekts (8) oder der Bereich des Mediums (8) beleuchtet wird, wobei die Beleuchtungsapertur $\leq 0{,}03$ ist, und
- aus einer Veränderung des mit dem Detektor (12) erfassten optischen Musters die Ablenkung der Beleuchtungsstrahlen ortsaufgelöst bestimmt wird.

2. Verfahren nach Anspruch 1,
**dadurch gekennzeichnet,**
**dass** die Abbildung des optischen Musters und die Abbildung auf den optischen Detektor (12) auf der Seite des Objekts oder Mediums telezentrisch erfolgen.

3. Verfahren nach Anspruch 1 oder 2,
**dadurch gekennzeichnet,**
**dass** die Lage der Ebene (7), in der das optische Muster abgebildet wird, und die numerische Apertur der Abbildung so gewählt werden, dass sowohl der spiegelnde Oberflächenbereich des Objekts (8) oder der Bereich des Mediums (8) als auch die Ebene (7), in der das optische Muster abgebildet wird, innerhalb der Rayleighschen Schärfentiefe der Abbildung auf den Detektor (12) liegen.

4. Verfahren nach einem der Ansprüche 1 bis 3,
**dadurch gekennzeichnet,**
**dass** das zur Beleuchtung eingesetzte optische Muster so gewählt wird, dass es in der Intensität periodisch über den Strahlquerschnitt variiert, und ein Phasenschiebeverfahren verwendet wird, um die Veränderung des mit dem Detektor (12) erfassten optischen Musters durch Ermittlung der Phasenlage jedes Punktes des Musters zu ermitteln.

5. Verfahren nach einem der Ansprüche 1 bis 4,
**dadurch gekennzeichnet,**
**dass** das optische Muster mit einem Mustergenerator (3) erzeugt wird, der entweder selbstleuchtend ausgebildet ist oder Licht einer Lichtquelle (1) in Transmission oder Reflexion moduliert.

6. Verfahren nach einem der Ansprüche 1 bis 5,
**dadurch gekennzeichnet,**
**dass** vor oder nach der Erfassung des optischen Musters mit dem Detektor (12) der spiegelnde Oberflächenbereich des Objekts (8) oder der Bereich des Mediums (8) ohne das optische Muster beleuchtet wird, um mit dem Detektor (12) ein Schlieren-Bild zu erfassen.

7. Verfahren nach einem der Ansprüche 1 bis 6 zur Bestimmung der ortsaufgelösten Neigung einer spiegelnden Oberfläche, insbesondere zur Bestimmung der Topographie der spiegelnden Oberfläche aus den Neigungsdaten.

8. Vorrichtung zur ortsaufgelösten Bestimmung der Ablenkung von Lichtstrahlen durch eine Objektstruktur oder ein Medium, mit der ein makroskopischer, spiegelnder Oberflächenbereich eines Objekts (8) oder ein makroskopischer Bereich des Mediums (8) von $\geq 1\text{cm}^2$ in einer Einzelmessung erfassbar ist, mit

- einem optischen Mustergenerator (3), mit dem der makroskopische, spiegelnde Oberflächenbereich des Objekts (8) oder der makroskopische Bereich des Mediums (8) mit wenigstens einem optischen Muster beleuchtbar ist,
- einem ortsauflösenden optischen Detektor (12), der so angeordnet ist, dass er an dem spiegelnden Oberflächenbereich des Objekts (8) reflektierte oder durch den Bereich des Mediums (8) hindurchgetretene Beleuchtungsstrahlen erfasst,
- einer ersten Abbildungsoptik (4, 6, 14), mit der das optische Muster des Mustergenerators (3) in eine Ebene (7) scharf abgebildet wird, die in Beleuchtungsrichtung in einem Abstand vor oder hinter dem spiegelnden Oberflächenbereich oder dem Bereich des Mediums (8) liegt,
- einer zweiten Abbildungsoptik (9, 11, 14), mit der der spiegelnde Oberflächenbereich des Objekts (8) oder ein anderer interessierender Bereich des Objekts (8) oder der Bereich des Mediums (8) auf den optischen Detektor (12) abgebildet wird und die zwischen dem Objekt (8) oder Medium (8) und dem Detektor (12) ein optisches Element (10) beinhaltet, durch das die numerische Apertur der Abbildung auf den optischen Detektor (12) so einstellbar ist, dass sie kleiner oder gleich der numerischen Apertur der Beleuchtung ist, mit der der spiegelnde Oberflächenbereich des Objekts (8) oder der Bereich des Mediums (8) beleuchtet wird, wobei die Beleuchtungsapertur ≤ 0,03 ist.

9. Vorrichtung nach Anspruch 8, bei der die erste Abbildungsoptik (4, 6, 14) zur Abbildung des optischen Musters und die zweite Abbildungsoptik (9, 11, 14) zur Abbildung auf den Detektor (12) so konfiguriert sind, dass ein telezentrischer Strahlengang auf der Seite des Objekts (8) oder Mediums (8) erhalten wird.

10. Vorrichtung nach Anspruch 8 oder 9, bei der die erste und zweite Abbildungsoptik aus einem telezentrischen Objektiv (14) bestehen.

11. Vorrichtung nach einem der Ansprüche 8 bis 10, bei der die erste Abbildungsoptik (4, 6, 14) zwischen dem Mustergenerator (3) und dem Objekt (8) oder Medium (8) so ausgebildet ist, dass damit die numerische Apertur der Beleuchtung einstellbar ist.

12. Vorrichtung nach einem der Ansprüche 8 bis 11, bei der der Mustergenerator (3) so ausgebildet ist, dass das Muster durch elektronische Ansteuerung geändert werden kann.

13. Vorrichtung nach einem der Ansprüche 8 bis 12, bei der eine Lichtquelle (1) zur Beleuchtung des Mustergenerators (3) angeordnet und der Mustergenerator (3) so ausgebildet ist, dass er das Licht der Lichtquelle (1) in Transmission oder Reflexion zur Erzeugung des Musters ortsabhängig moduliert, und bei der das optische Element (10) zur Einstellung der numerischen Apertur der Abbildung in einer Ebene angeordnet ist, in die die Lichtquelle (1) durch optische Komponenten der ersten (4, 6, 14) und zweiten Abbildungsoptik (9, 11) abgebildet wird.

14. Vorrichtung nach einem der Ansprüche 8 bis 13, bei der der optische Detektor (12) entlang der optischen Achse der zweiten Abbildungsoptik (9, 11, 14) verstellbar gelagert ist.

15. Vorrichtung nach einem der Ansprüche 8 bis 14, bei der die zweite Abbildungsoptik (9, 11, 14) zur Verschiebung der Objektebene der Abbildung verstellbar ausgebildet ist.

16. Vorrichtung nach einem der Ansprüche 8 bis 15, bei der der Mustergenerator (3) entlang der optischen Achse der ersten Abbildungsoptik (4, 6, 14) verstellbar gelagert ist, um die Ebene (7), in der das Muster abgebildet wird, zu verändern.

17. Vorrichtung nach einem der Ansprüche 8 bis 16, bei der die erste Abbildungsoptik (4, 6, 14) zum Verändern der Ebene (7), in der das Muster abgebildet wird, verstellbar ausgebildet ist.

**Claims**

1. Method for the spatially resolved determination of the deflection of light beams by an object structure or a medium, in which an area $\geq 1$ cm$^2$ of a macroscopic, reflective surface region of an object (8) or of a macroscopic region of the medium (8) is captured in a single measurement, in which the macroscopic, reflective surface region of the object (8) or the macroscopic region of the medium (8) is illuminated with at least one optical pattern, and illumination beams which have been reflected on the reflective surface region or passed through the region of the medium (8) are captured with a spatially resolving optical detector (12), wherein

   - during the illumination of the reflective surface region or of the region of the medium (8) the optical pattern used for the illumination is projected with a first imaging optics (4, 6, 14) in sharp definition into a plane (7) which lies at a distance in front of or behind the reflective surface region or the region of the medium (8) in the direction of illumination,
   - during the capture of the illumination beams with the optical detector (12), the reflective surface region of the object (8) or another region of interest of the object (8) or the region of the medium (8) is projected onto the optical detector (12) with a second imaging optics (9, 11, 14),
   - the numerical aperture of the projection is set with an optical element (10) arranged between the object (8) or medium (8) and the detector (12) in such manner that it is smaller than or equal to the numerical aperture of the illumination with which the reflective surface region of the object (8) or the region of the medium (8) is illuminated, wherein the illumination aperture is $\leq 0.03$, and
   - the deflection of the illuminating beams is determined in spatially resolved manner from a change in the optical pattern captured with the detector (12) .

2. Method according to Claim 1,
   **characterized in that**
   the projection of the optical pattern and the projection onto the optical detector (12) take place telecentrically on the side of the object or medium.

3. Method according to Claim 1 or 2,
   **characterized in that**
   the position of the plane (7) in which the optical pattern is projected and the numerical aperture of the projection are chosen such that both the reflective surface region of the object (8) or the region of the medium (8) and the plane (7) in which the optical pattern is projected lie within the Rayleigh depth of focus of the projection onto the detector (12).

4. Method according to any one of Claims 1 to 3,
   **characterized in that**
   the optical pattern used for illumination is chosen such that it varies in intensity periodically over the beam cross-section, and a phase shifting procedure is used to determine the change in the optical pattern captured with the detector (12) by determining the phase position of each point of the pattern.

5. Method according to any one of Claims 1 to 4,
   **characterized in that**
   the optical pattern is produced with a pattern generator (3) which is either configured self-illuminating or modulates light from a light source (1) in transmission or reflection.

6. Method according to any one of Claims 1 to 5,
   **characterized in that**
   before or after the capture of the optical pattern with the detector (12) the reflective surface region of the object (8) or the region of the medium (8) is illuminated without the optical pattern in order to capture a Schlieren image with the detector (12).

7. Method according to any one of Claims 1 to 6 for determining the spatially resolved inclination of a reflective surface, in particular for determining the topography of the reflective surface from the inclination data.

8. Device for the spatially resolved determination of the deflection of light beams by an object structure or a medium, with which an area $\geq 1$ cm$^2$ of a macroscopic, reflective surface region of an object (8) or of a macroscopic region of the medium (8) can be captured in a single measurement, having

- an optical pattern generator (3) with which the macroscopic, reflective surface region of the object (8) or the macroscopic region of the medium (8) can be illuminated with at least one optical pattern,
- a spatially resolving optical detector (12) which is arranged in such manner that it captures illumination beams which are reflected on the reflective surface region of the object (8) or have passed through the region of the medium (8),
- a first imaging optics (4, 6, 14), with which the optical pattern from the pattern generator (3) is projected in sharp definition into a plane (7) which lies at a distance in front of or behind the reflective surface region or the region of the medium (8) in the direction of illumination,
- a second imaging optics (9, 11, 14), with which the reflective surface region of the object (8) or another region of interest of the object (8) or the region of the medium (8) is projected onto the optical detector (12), and which includes an optical element (10) between the object (8) or medium (8) and the detector (12), by which the numerical aperture of the projection onto the optical detector (12) is adjustable in such manner that it is smaller than or equal to the numerical aperture of the illumination with which the reflective surface region of the object (8) or the region of the medium (8) is illuminated, wherein the illumination aperture is $\leq 0.03$.

9. Apparatus according to Claim 8,
   wherein the first imaging optics (4, 6, 14) for projecting the optical pattern and the second imaging optics (9, 11, 14) for projecting onto the detector (12) are configured such that a telecentric beam path is obtained on the side of the object (8) or medium (8) .

10. Apparatus according to Claim 8 or 9,
    wherein the first and second imaging optics consist of a telecentric lens (14).

11. Apparatus according to any one of Claims 8 to 10,
    wherein the first imaging optics (4, 6, 14) is constructed between the pattern generator (3) and the object (8) or medium (8) in such manner that the numerical aperture of the illumination can be adjusted therewith.

12. Apparatus according to any one of Claims 8 to 11,
    wherein the pattern generator (3) is constructed such that the pattern can be changed by electronic control.

13. Apparatus according to any one of Claims 8 to 12,
    wherein a light source (1) is arranged for illuminating the pattern generator (3) and the pattern generator (3) is constructed in such manner that it modulates the light from the light source (1) in transmission or reflection to produce the pattern in spatially resolved manner, and wherein the optical element (10) for adjusting the numerical aperture of the projection is arranged in a plane into which the light source (1) is projected by optical components of the first (4, 6, 14) and the second (9, 11) imaging optics.

14. Apparatus according to any one of Claims 8 to 13,
    wherein the optical detector (12) is mounted so as to be displaceable along the optical axis of the second imaging optics (9, 11, 14).

15. Apparatus according to any one of Claims 8 to 14,
    wherein the second imaging optics (9, 11, 14) is constructed displaceably so as to shift the object plane of the projection.

16. Apparatus according to any one of Claims 8 to 15,
    wherein the pattern generator (3) is mounted so as to be displaceable along the optical axis of the first imaging optics (4, 6, 14) in order to change the plane (7) in which the pattern is projected.

17. Apparatus according to any one of Claims 8 to 16,
    wherein the first imaging optics (4, 6, 14) is constructed displaceably in order to change the plane (7) in which the pattern is projected.


**Revendications**

1. Procédé de détermination à résolution spatiale de la déviation de rayons lumineux à travers une structure d'objet ou un milieu,

dans lequel une zone de surface réfléchissante macroscopique d'un objet (8) ou une zone macroscopique du milieu (8) de $\geq 1$ cm$^2$ est détectée en une mesure unique,

dans lequel la zone de surface réfléchissante macroscopique de l'objet (8) ou la zone macroscopique du milieu (8) est illuminée avec au moins un motif optique et des rayons d'illumination passant à travers la zone du milieu (8) ou réfléchis sur la surface d'objet réfléchissante sont détectés avec un détecteur optique (12) à résolution spatiale, dans lequel

- lors de l'illumination de la zone de surface réfléchissante ou de la zone du milieu (8) le motif optique employé pour l'illumination est visualisé avec un fort contraste avec une première optique d'imagerie (4, 6, 14) dans un plan (7), qui est situé à un espacement devant ou derrière la zone de surface réfléchissante ou la zone du milieu (8) dans la direction d'illumination,
- lors de la détection des rayons d'illumination avec le détecteur optique (12) la zone de surface réfléchissante de l'objet (8) ou une autre zone de l'objet (8) présentant un intérêt ou la zone du milieu (8) est visualisé avec une deuxième optique d'imagerie (9, 11, 14) sur le détecteur optique (12),
- l'ouverture numérique de l'imagerie est réglée avec un élément optique (10) disposé entre l'objet (8) ou le milieu (8) et le détecteur (12), de sorte qu'elle soit plus petite ou identique à l'ouverture numérique de l'illumination, avec laquelle la zone de surface réfléchissante de l'objet (8) ou la zone du milieu (8) est illuminée, dans lequel l'ouverture d'illumination est $\leq 0{,}03$ et
- la déviation des rayons d'illumination est déterminée avec résolution spatiale d'après une variation du motif optique détectée avec le détecteur (12).

2. Procédé selon la revendication 1, caractérisé ce que l'imagerie du motif optique et l'imagerie sur le détecteur optique (12) ont lieu de manière télécentrique sur le côté de l'objet ou du milieu.

3. Procédé selon la revendication 1 ou 2, caractérisé ce que la position du plan (7), dans lequel le motif optique est visualisé et l'ouverture numérique de l'imagerie sont sélectionnés de telle sorte que tant la zone de surface réfléchissante de l'objet (8) ou la zone du milieu (8) que le plan (7), dans lequel le motif optique est visualisé, sont situées à l'intérieur de la profondeur de champ des ondes de Rayleigh de l'imagerie sur le détecteur (12).

4. Procédé selon une revendication 1 à 3, **caractérisé en ce que** le motif optique employé pour l'illumination est sélectionné de sorte qu'il varie périodiquement en intensité sur la section transversale du rayon et un procédé de décalage de phase est employé, afin de déterminer la variation du motif optique détecté avec le détecteur (12) en déterminant la position de base de chaque point du motif.

5. Procédé selon une des revendications 1 à 4, **caractérisé en ce que** le motif optique est généré avec un générateur de motif (3), qui soit est configuré de manière auto éclairante, soit module la lumière d'une source lumineuse (1) lors de la transmission ou la réflexion.

6. Procédé selon une des revendications 1 à 5, **caractérisé en ce que** avant ou après la détection du motif optique avec le détecteur (12) la zone de surface réfléchissante de l'objet (8) ou la zone du milieu (8) est illuminée sans le motif optique, afin de détecter avec le détecteur (12) une image de stries.

7. Procédé selon une des revendications 1 à 6 pour la détermination de l'inclinaison à résolution spatiale d'une surface réfléchissante, notamment pour la détermination de la topographie de la surface réfléchissante d'après les données d'inclinaison.

8. Dispositif de détermination à résolution spatiale de la déviation de rayons lumineux à travers une structure d'objet ou un milieu,

dans lequel une zone de surface réfléchissante macroscopique d'un objet (8) ou une zone macroscopique du milieu (8) de $\geq 1$ cm$^2$ peut être détectée en une mesure unique, comportant

- un générateur de motif optique (3), avec lequel la zone de surface réfléchissante macroscopique de l'objet (8) ou la zone macroscopique du milieu (8) peut être illuminée avec au moins un motif optique,
- un détecteur optique à résolution spatiale (12), est disposé de telle sorte qu'il détecte les rayons d'illumination passant à travers la zone du milieu (8) ou réfléchis sur la surface d'objet (8) réfléchissante,
- une première optique d'imagerie (4, 6, 14), avec laquelle le motif optique du générateur de motif (3) est visualisé avec un fort contraste dans un plan (7), qui est situé à un espacement devant ou derrière la zone de surface réfléchissante ou la zone du milieu (8) dans la direction d'illumination,

- une deuxième optique d'imagerie (9, 11, 14), avec laquelle la zone de surface réfléchissante de l'objet (8) ou une autre zone de l'objet (8) présentant un intérêt ou la zone du milieu (8) est visualisée sur le détecteur optique (12) et qui contient un élément optique (10) entre l'objet (8) ou le milieu (8) et le détecteur (12), par l'intermédiaire duquel l'ouverture numérique de l'imagerie peut être réglée sur le détecteur optique (12) de telle sorte qu'elle soit plus petite ou identique à l'ouverture numérique de l'illumination, avec laquelle la zone de surface réfléchissante de l'objet (8) ou la zone du milieu (8) est illuminée, dans lequel l'ouverture d'illumination est ≤ 0,03.

9. Dispositif selon la revendication 8, dans lequel la première optique d'imagerie (4, 6, 14) pour visualiser le motif optique et la deuxième optique d'imagerie (9, 11, 14) pour la visualisation sur le détecteur (12) sont configurées de telle sorte qu'un trajet optique télécentrique sur le côté de l'objet (8) ou du milieu (8) soit obtenu.

10. Dispositif selon la revendication 8 ou 9, dans lequel la première et la deuxième optique d'imagerie (14) sont constitués d'un objectif télécentrique.

11. Dispositif selon une des revendications 8 à 10, dans lequel la première optique imagerie (4, 6, 14) est réalisé entre le générateur de motif (3) et l'objet (8) ou le milieu (8) de telle sorte que l'ouverture numérique de l'éclairage puisse être réglée de cette manière.

12. Dispositif selon une des revendications 8 à 11, dans lequel le générateur de motif (3) est configuré de telle sorte que le motif puisse être modifié par une commande électronique.

13. Dispositif selon une des revendications 8 à 12, dans lequel une source lumineuse (1) pour l'illumination du générateur de motif (3) est disposée et le générateur de motif (3) est configuré de telle sorte qu'il module la lumière de la source lumineuse (1) lors d'une transmission ou d'une réflexion pour générer le motif avec une résolution spatiale, et dans lequel l'élément optique (10) pour le réglage de l'ouverture numérique de l'imagerie est disposé dans un plan, dans lequel la source lumineuse (1) est visualisée au moyen des composants optiques de la première (4, 6, 14) et la deuxième (9, 11) optique d'imagerie.

14. Dispositif selon une des revendications 8 à 13, dans lequel le détecteur optique (12) est positionné de manière ajustable le long de l'axe optique de la deuxième optique d'imagerie (9, 11, 14).

15. Dispositif selon une des revendications 8 à 14, dans lequel la deuxième optique d'imagerie (9, 11, 14) est configurée de manière ajustable pour décaler les plans d'objet de l'imagerie.

16. Dispositif selon une des revendications 8 à 15, dans lequel le générateur de motif (3) est positionné de manière ajustable le long de l'axe optique de la première optique d'imagerie (4, 6, 14), afin de modifier le plan (7), dans lequel le motif est visualisé.

17. Dispositif selon une des revendications 8 à 16, dans lequel la première optique d'imagerie (4, 6, 14) est configurée de manière ajustable pour modifier le plan (7), dans lequel le motif est visualisé.

Fig. 1

Fig. 2a

Fig. 2b

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008023599 A1

**In der Beschreibung aufgeführte Nicht-Patentliteratur**

- **M.C. KNAUER et al.** Deflektometrie macht der Interferometrie Konkurrenz. *Technisches Messen 76,* 2009, vol. 4, 175-181